(19) Europäisches Patentamt
European Patent Office
Office européen des brevets

(11) **EP 3 671 628 A1**

(12) **EUROPEAN PATENT APPLICATION**

(43) Date of publication:
**24.06.2020 Bulletin 2020/26**

(51) Int Cl.:
***G06T 5/50*** *(2006.01)*

(21) Application number: **18306721.4**

(22) Date of filing: **18.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings 75017 Paris (FR)**

(72) Inventors:
- **SABATER, Neus**
  **35576 Cesson-Sévigné (FR)**
- **VANDAME, Benoît**
  **35576 Cesson-Sévigné (FR)**
- **KERBIRIOU, Paul**
  **35576 Cesson-Sévigné (FR)**

(74) Representative: **Huchet, Anne InterDigital CE Patent Holdings 20, rue Rouget de Lisle 92130 Issy-les-Moulineaux (FR)**

(54) **A METHOD AND A DEVICE FOR OBTAINING DATA REPRESENTATIVE OF A SCENE FROM A PLURALITY OF THREE-DIMENSIONAL (3D) POINTS REPRESENTING SAID SCENE**

(57) A known solution for storing light-field data in a compact format is called Multi-View plus Depth (MVD). A MVD content comprises the different images representing a light-field data, such as the sub-aperture images, and their respective depth map.

MVD provides angular information such as a color associated to a point in space depending on the viewing direction along which this point is viewed by a camera.

Although MVD conveniently stores light-field data, such a format is not convenient for post-processing operations of light-file data because MVD provides information viewed by a plurality of sensors and is limited in the amount of other data related to the light-field data that can be stored. The disclosure provides a format for storing light-field data having the same advantages as MVD while being able to store data related to the light-filed data more convenient to use with existing post-processing tools.

**Fig. 3**

**Description**

**1. Field of the invention**

The present disclosure relates to a method and a device for formatting data representative of a multi-view plus depth content.

**2. Background**

The acquisition of light-field data, which can be viewed as a sampling of a light field, i.e. the recording of light rays, is explained in the article "Understanding camera trade-offs through a Bayesian analysis of light field projections" by Anat Levin et al., published in the conference proceedings of ECCV 2007 in a hectic research subject.

Compared to classical two-dimensional or 2D images obtained from a camera, light-field data enable a user to have access to more post-processing features that enhance the rendering of images and the interactivity with the user. For example, with light-field data, it is possible to perform refocusing of images with freely selected distances of focalization meaning that the position of a focal plane can be specified/selected a posteriori, as well as changing slightly the point of view in the scene of an image. In order to acquire light-field data, several techniques can be used.

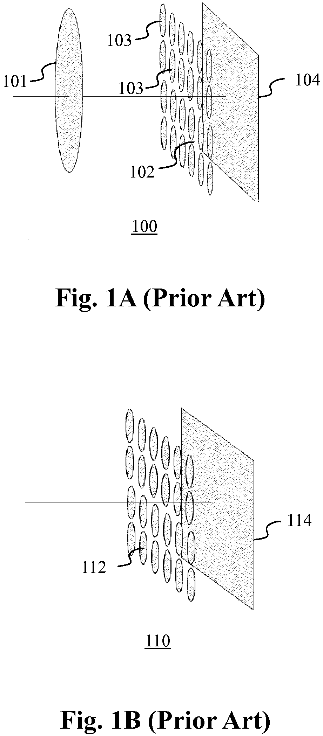

For example, a plenoptic camera is able to acquire light-field data. Details of the architecture of a plenoptic camera are provided in **Figure 1A.** Figure 1A is a diagram schematically representing a plenoptic camera 100. The plenoptic camera 100 comprises a main lens 101, a micro-lens array 102 comprising a plurality of micro-lenses 103 arranged in a two-dimensional array and an image sensor 104. The light enters the plenoptic camera 100 through the main lens 101, goes through the micro-lens array 107 and is captured by the image sensor 104 that generates light-field data.

Another way to acquire light-field data is to use a camera array as depicted in **Figure 1B.** Figure 1B represents a multi-array camera 110. The multi-array camera 110 comprises a lens array 112 and an image sensor 114. The light enters the multi-array camera 110 through the lens array 112 and is captured by the image sensor 114 that generates light-field data.

There are several ways to represent light-field data. Indeed, in the Chapter 3.3 of the Ph.D dissertation thesis entitled "Digital Light Field Photography" by Ren Ng, published in July 2006, different ways to represent light-field data are described.

Firstly, light-field data can be represented, when recorded by a plenoptic camera by a collection of micro-lens images. Light-field data in this representation are named raw images or raw light-field data. Secondly, light-field data can be represented, either when recorded by a plenoptic camera or by a camera array, by a set of sub-aperture images. A sub-aperture image corresponds to a captured image of a scene from a point of view, the point of view being slightly different between two sub-aperture images. These sub-aperture images give information about the parallax and depth of the imaged scene.

A known solution for storing light-field data in a compact format is called Multi-View plus Depth (MVD). An MVD content comprises the different images representing a light-field data, such as the sub-aperture images, and their respective depth map.

MVD provides angular information, such as a color associated to a point in space for each viewing direction along which this point is viewed by a camera.

Although MVD conveniently stores light-field data, such a format is not convenient for post-processing operations of light-file data because it is not user-friendly. Indeed, manipulating MVD can take time since this format comprises data acquired by a plurality of sensors.

Therefore, there is a need for a format for storing information related to light-field data that while presenting the advantages of MVD does not share some of its drawbacks.

**3. Summary**

The present disclosure concerns a method executed by at least one processor and comprising:

- obtaining a digital file representative of at least one meta-image of a scene, said digital file comprising, for at least one pixel of said meta-image, at least one set of parameters representative of a first 3D point of a plurality of 3D points representing said scene, said set of parameters comprising:
- a first parameter representing respective colors of said 3D point when it is viewed along at least two first viewing directions of said scene.

Another object of the present disclosure is a device for obtaining data representative of a scene comprising at least one processor configured to:

- obtain a digital file representative of at least one meta-image of a scene, said digital file comprising, for at least one pixel of said meta-image, at least one set of parameters representative of a first 3D point of a plurality of 3D points representing said scene, said set of parameters comprising:
- a first parameter representing respective colors of said 3D point when it is viewed along at least two first viewing directions of said scene.

In some embodiments, the signal can be intended to be transmitted from a device for obtaining data representative of a scene, as introduced above, to a device for editing an image of said scene, as introduced above.

Some processes implemented by elements of the invention can be computer implemented. Accordingly, such elements can take the form of an entirely hardware embodiment, an entirely software embodiment (including firmware, resident software, micro-code, etc.) or an embodiment combining software and hardware aspects that can all generally be referred to herein as a "circuit", "module" or "system". Furthermore, such elements can take the form of a computer program product embodied in any tangible medium of expression having computer usable program code embodied in the medium.

Since elements of the present invention can be implemented in software, the present invention can be embodied as computer readable code for provision to a programmable device on any suitable carrier medium. A tangible carrier medium can comprise a storage medium such as a floppy disk, a CD-ROM, a hard disk drive, a magnetic tape device or a solid-state memory device and the like. A transient carrier medium can include a signal such as an electrical signal, an electronic signal, an optical signal, an acoustic signal, a magnetic signal or an electromagnetic signal, e.g. a microwave or RF signal.

## 4. Brief description of the drawings

The present disclosure can be better understood with reference to the following description and drawings, given by way of example and not limiting the scope of protection, and in which:

- Figure 1A represents the architecture of a plenoptic camera,
- Figure 1B represents a multi-array camera,
- Figure 2 represents an example of a system in which an MVD content is acquired according to an embodiment of the disclosure,
- Figure 3 represents a system in which the method according to an embodiment of the disclosure is implemented,
- Figure 4 is a schematic block diagram illustrating an example of a device for obtaining the meta-image according to an embodiment of the present disclosure,
- Figure 5 is a flow chart for explaining a process for generating data representative of a scene from a plurality of three-dimensional (3D) points representing said scene according to an embodiment of the present disclosure
- Figure 6 represents a digital file obtain according to the method of the present disclosure,
- Figure 7 is a schematic block diagram illustrating an example of a device for processing the meta-image according to an embodiment of the present disclosure,
- Figure 8 is a flow chart for explaining a process for processing the meta-image according to an embodiment of the disclosure.

The components in the figures are not necessarily to scale, emphasis instead being placed upon illustrating the principles of the disclosure.

## 5. Detailed description

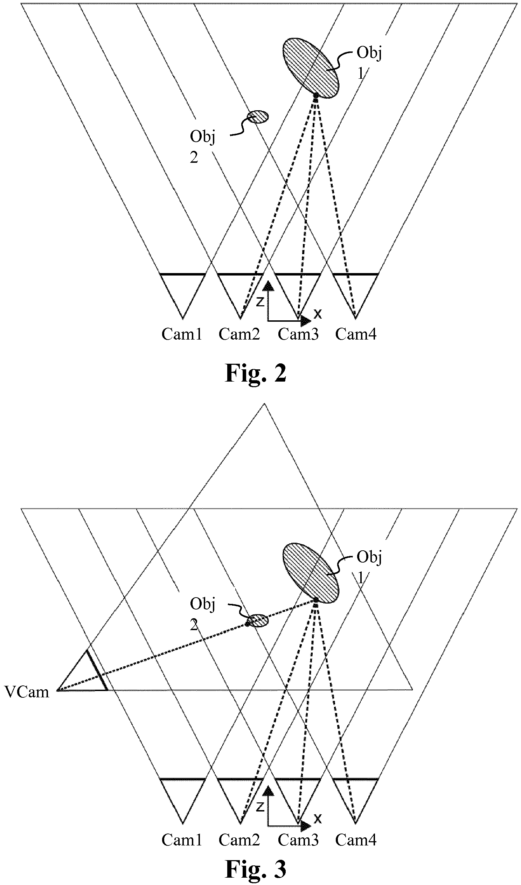

**Figure 2** represents an example of a system in which an MVD content is acquired according to an embodiment of the disclosure.

Thus, a scene comprising two objects Obj1 and Obj2 is acquired by a camera-array comprising four cameras Cam1, Cam2, Cam3 and Cam4. In an embodiment of the disclosure, the scene can be acquired by a unique plenoptic camera generating four sub-aperture images.

Four images of the scene are acquired, each by one of the four cameras Cam1, Cam2, Cam3 and Cam4. A depth map is obtained for each of the four images.

From this MVD content, it is possible to obtain a three-dimensional (3D) point cloud representing the scene acquired by the camera-array. A 3D point of the 3D point cloud representing the scene is associated with at least two parameters in addition to its coordinates in the world coordinates system. The first parameter represents a viewing direction along which said 3D point can be viewed. Such a first parameter consists for example in an index identifying a camera Cam1-Cam4 of the camera-array.

The second parameter represents a color of said 3D point when it is viewed along said viewing direction. Such a second parameter consists for example of a triplet of RGB values or of HSI values, etc.

Thus, a 3D point of the 3D point cloud representing the scene is associated with as many pairs of first and second parameters as the number of cameras Cam1-Cam4 of the camera-array actually viewing the considered 3D point. In other words, if two cameras Cam1 and Cam 2 of the camera-array actually view a given 3D point of the 3D point cloud representing the scene, then this 3D point is associated with two pairs of first and second parameters, each pair corresponding to a camera Cam1 and Cam2 of the camera-array. Since the viewing direction of each camera Cam1 and Cam 2 is different, the 3D point can have a different color in an image acquired by camera Cam1 and in an image acquired by camera Cam2.

A goal of the present disclosure is to provide a format for storing light-field data having, in at least some embodiments, at least some of the advantages of MVD while requiring, in at least some embodiments, less storage capability for storing data related to the light field data, and thus being able to store more data related to the light-filed data, than MVD and/or being more convenient to use with existing post-processing tools than MVD.

**Figure 3** represents an optical acquiring system in which the method according to an embodiment of the disclosure is implemented. The elements comprised in the system of figure 3 already disclosed in reference to figure 2 have the same reference number.

The parameters associated with the 3D points of the 3D point cloud representing the scene are associated with pixels of a meta-image Met-Im. The meta-image Met-Im corresponds to a view of the scene acquired by a virtual camera VCam. This virtual camera VCam can be located anywhere in the world coordinate system as long as a region of interest of the scene, in its entirety, is inside the field of view of the virtual camera VCam. The pixels of a meta-image Met-Im correspond to the pixels of the virtual camera VCam used to acquire the scene.

The meta-image Met-Im can be provided as a data file stored for example on a CD-ROM and/or a flash drive supplied with the optical acquisition system. The data file containing said meta-image Met-Im can also be downloaded from a server belonging to the manufacturer of the optical acquisition system or the provider of said light-field data.

The knowledge of the meta-image Met-Im enables the processing of the 3D point cloud.

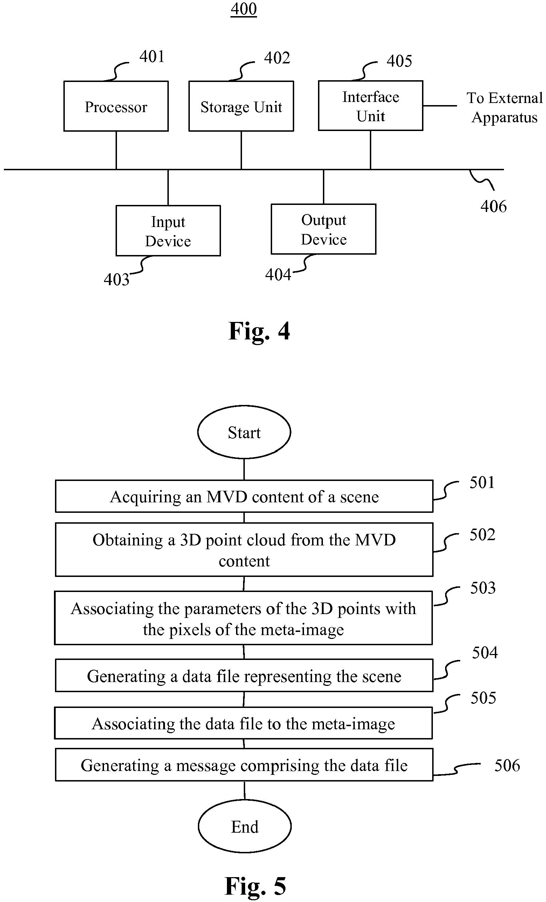

**Figure 4** is a schematic block diagram illustrating an example of a device for obtaining the meta-image Met-Im according to an embodiment of the present disclosure.

The device 400 comprises a processor 401, a storage unit 402, an input device 403, a display device 404, and an interface unit 405 which are connected by a bus 506. Of course, constituent elements of the computer device 400 can be connected by a connection other than a bus connection.

The processor 401 controls operations of the device 400. The storage unit 402 stores at least one program capable of obtaining the meta-image Met-Im to be executed by the processor 401, and various data, including parameters related to the 3D points of the 3D point cloud used by computations performed by the processor 401, intermediate data of computations performed by the processor 401, and so on. The processor 401 can be formed by any known and suitable hardware, or software, or a combination of hardware and software. For example, the processor 401 can be formed by dedicated hardware such as a processing circuit, or by a programmable processing unit such as a CPU (Central Processing Unit) that executes a program stored in a memory thereof.

The storage unit 402 can be formed by any suitable storage or means capable of storing the program, data, or the like in a computer-readable manner. Examples of the storage unit 402 include non-transitory computer-readable storage media such as semiconductor memory devices, and magnetic, optical, or magneto-optical recording media loaded into a read and write unit. The program causes the processor 401 to perform a process for computing the meta-image Met-Im parameters and encoding parameters associated with said meta-image Met-Im according to an embodiment of the present disclosure as described hereinafter with reference to figure 5.

The input device 403 can be formed by a keyboard, a pointing device such as a mouse, or the like for use by the user to input commands, to make user's selections of parameters. The output device 404 can be formed by a display device to display, for example, a Graphical User Interface (GUI), or images generated according to an embodiment of the present disclosure. The input device 403 and the output device 404 can be formed integrally by a touchscreen panel, for example. The input and output devices can also be distinct devices.

The interface unit 405 provides an interface between the device 400 and an external device. The interface unit 405 can be communicable with the external device via cable and/or wireless communication. In an embodiment, the external device can be an optical acquisition system, such as a camera, a smartphone, a tablet, or a device capable of processing the meta-image M-Im based on the parameters stored in the meta-image M-Im.

**Figure 5** is a flow chart for explaining a process for generating data representative of a scene from a plurality of three-dimensional (3D) points representing said scene according to an embodiment of the present disclosure.

In a step 501, an MVD content representing the scene is acquired by an acquiring device, being for instance a plenoptic camera or a camera-array.

In a step 502, a 3D point cloud representing the scene is obtained from said MVD content. One of the difference(s) between the 3D point cloud obtained in step 502 and a conventional 3D point cloud is that, for a given 3D point of a 3D point cloud according to the disclosure, several values of colors are associated to a given 3D point of the 3D point cloud, each one of these values corresponding to the different cameras used to acquire the MVD content and seeing this given 3D point.

For each camera Cam1-Cam4, or each sub-aperture image, of the acquisition device, two matrices are defined that are estimated using calibration data of the acquisition device.

These two matrices are a projection matrix, also called intrinsic matrix, and a pose matrix, also called extrinsic matrix. These two matrixes are estimated for each camera or sub-aperture image of the acquisition device.

The projection matrix for a given camera of the camera-array is defined as:

$$K_c = \begin{bmatrix} f_u & 0 & c_u & 0 \\ 0 & f_v & c_v & 0 \\ 0 & 0 & 0 & 1 \\ 0 & 0 & 1 & 0 \end{bmatrix}$$

where $f_u$ and $f_v$ are the focal length respectively in horizontal and a vertical direction, $c_u$ and $c_v$ are the horizontal and the vertical coordinates of an intersection of an optical axis of the camera with a sensor.

The pose matrix for a given camera of the camera-array is defined as:

$$P_c = \begin{bmatrix} r_{11} & r_{12} & r_{13} & T_x \\ r_{21} & r_{22} & r_{13} & T_y \\ r_{21} & r_{32} & r_{33} & T_z \\ 0 & 0 & 0 & 1 \end{bmatrix}$$

where $r_{11}$ to $r_{33}$ are elements of a 3D rotation matrix that describe the rotation of the given camera versus the world coordinate system, $T_x$, $T_y$ and $T_z$ are components of the translation of the given camera versus the world coordinate system, $T_x$, $T_y$ and $T_z$.

For convenience, the origin of the world coordinate system is located at the center of the camera-array.

Considering a pixel (u, v) of a camera for which the parameter representing the color associated with said pixel, for example a RGB triplet, and a parameter representing the depth (z(u, v, c)) of said pixel are available, the pixel (u, v) is unprojected in the 3D space by using the following equation:

$$\begin{bmatrix} X \\ Y \\ Z \\ 1 \end{bmatrix} = z_{uv} * P_c * K_c^{-1} * \begin{bmatrix} u \\ v \\ 1/z_{uv} \\ 1 \end{bmatrix} = \begin{bmatrix} T_x + z_{uv}\left(r_{11}\dfrac{u - c_u}{f_u} + r_{12}\dfrac{v - c_v}{f_v} + r_{13}\right) \\ T_y + z_{uv}\left(r_{21}\dfrac{u - c_u}{f_u} + r_{22}\dfrac{v - c_v}{f_v} + r_{23}\right) \\ T_z + z_{uv}\left(r_{31}\dfrac{u - c_u}{f_u} + r_{32}\dfrac{v - c_v}{f_v} + r_{33}\right) \\ 1 \end{bmatrix}$$

where $\begin{bmatrix} X \\ Y \\ Z \\ 1 \end{bmatrix}$ are the coordinates of the unprojected pixel in the world coordinates system.

Thus, the 3D points constituting said 3D point cloud are associated with at least two parameters in addition to its coordinates in the world coordinates system. The first parameter represents a viewing direction along which said 3D point can be viewed. The second parameter represents a color of said 3D point when it is viewed along said viewing direction.

In a step 503, the parameters associated with the 3D points of the 3D point cloud representing the scene are associated with pixels of the meta-image Met-Im that corresponds to a view of the scene acquired by the virtual camera VCam used to acquire a view of the scene.

The virtual camera VCam is positioned in relation to the scene so that its viewing cone, or *frustum,* includes as much as possible the region of interest of the scene. In practice, the virtual camera VCam is often placed at a location and in a viewing direction closed to those of the cameras used to acquire the 3D point cloud.

The 3D points of the 3D point cloud are projected on the virtual sensor of the virtual camera VCam.

In the following equations, the subscript p denotes the virtual camera VCam on which the projection is done. This way, the projection matrix of the virtual camera VCam is $K_p$ and the pose matrix of the virtual camera VCam is $P_p$.

The following equation is used to project a 3D point of the 3D point cloud into the pixels of the virtual sensor of the virtual camera VCam:

$$\begin{bmatrix} u * Z_p \\ v * Z_p \\ 1 \\ Z_p \end{bmatrix} = K_p * P_p^{-1} \begin{bmatrix} X \\ Y \\ Z \\ 1 \end{bmatrix}$$

So,

$$\begin{bmatrix} u * Z_p \\ v * Z_p \\ 1 \\ Z_p \end{bmatrix} = K_p * P_p^{-1} * z_{uv} * P_c * K_c^{-1} * \begin{bmatrix} u \\ v \\ 1 \\ \frac{1}{z_{(u,v)}} \\ 1 \end{bmatrix}_c$$

Finally, a pixel in the virtual sensor of the virtual camera VCam is be obtained by:

$$\begin{bmatrix} u \\ v \\ 1/Z_p \\ 1 \end{bmatrix} = \frac{1}{Z_p} \begin{bmatrix} u * Z_p \\ v * Z_p \\ 1 \\ Z_p \end{bmatrix}$$

In a step 504, the processor 401 generates a digital file comprising data representative of the scene as acquired by the virtual camera Vcam.

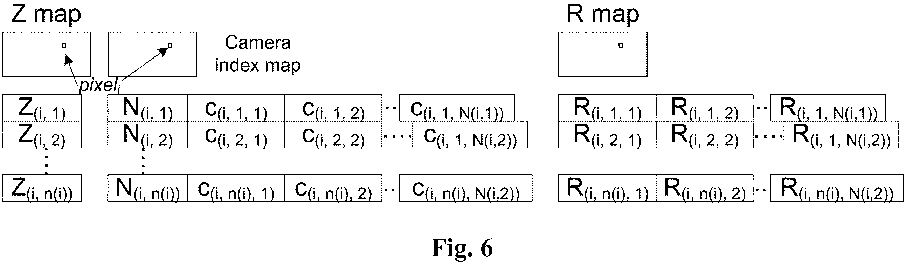

An exemplary structure of such a digital file 60 is represented on **figure 6.** The virtual sensor of the virtual camera VCam, and consequently the meta-image Met-Im, comprises i pixels, n(i) represents the number of 3D points located along the viewing direction of pixel i. In the digital file 60:

- $Z_{(i, n(i))}$ represents the location of a 3D point along the viewing direction of pixel i, of the virtual camera Vcam
- $N_{(i, n(i))}$ represents the number of cameras of the camera-array actually viewing the 3D point located at $Z_{(i, n(i))}$ along the viewing direction of pixel i,
- $C_{(i, n(i), N(i, n(i)))}$ represents the indexes of the cameras of the camera-array actually viewing the 3D point located at $Z_{(i, n(i))}$ along the viewing direction of pixel i, and
- $R_{(i, n(i), N(i, n(i)))}$ represents a value of the R component of the RGB triplet representing a color of the 3D point when viewed by the corresponding camera $C_{(i, n(i), N(i, n(i)))}$ of the camera-array.

The B and G components of the RGB triplet are not represented on figure 6 for the sake of clarity.

Thus, in the exemplary embodiment of figure 6, each point having the location $Z_{(i, n(i))}$ along the viewing direction of pixel i, is associated with at least a first and a second parameter.

The first parameter representing a viewing direction along which the 3D point can be viewed comprises the number $N_{(i, n(i))}$ of cameras actually viewing the 3D point located along the viewing direction of pixel i and the indexes $C_{(i, n(i), N(i, n(i)))}$ of the cameras actually viewing the 3D point.

The second parameter representing colors of a 3D point when it is viewed along a given viewing direction by the $N_{(i, n(i))}$ cameras of indexes $C_{(i, n(i), N(i, n(i)))}$. It comprises $N_{(i, n(i))}$ values $R_{(i, n(i), N(i, n(i)))}$ of the R component of the RGB triplet, a value $R_{(i, n(i), N(i, n(i)))}$ representing a color of a 3D point when viewed by the corresponding camera $C_{(i, n(i), N(i, n(i)))}$ of the camera-array, $N_{(i, n(i))}$ values $G_{(i, n(i), N(i, n(i)))}$ of the G component of the RGB triplet, a value $G_{(i, n(i), N(i, n(i)))}$ representing a color of a 3D point when viewed by the corresponding camera $C_{(i, n(i), N(i, n(i)))}$ of the camera-array, and $N_{(i, n(i))}$ values $B_{(i, n(i), N(i, n(i)))}$ of the B component of the RGB triplet, a value $B_{(i, n(i), N(i, n(i)))}$ representing a color of a 3D point when viewed by the corresponding camera $C_{(i, n(i), N(i, n(i)))}$ of the camera-array.

In an example of implementation, for a pixel i of the meta-image M-Im, the digital file 60 is a table comprising as many lines as the number of 3D points located along the viewing direction of pixel i. The digital file then comprises at least:

- the number n(i) of 3D points located along the viewing direction of pixel i
- a column or list comprising the values $Z_{(i, n(i))}$, corresponding to the location of those 3D points,
- a column or list comprising the number of cameras of the camera-array actually viewing a 3D point located along the viewing direction of pixel i $N_{(i, n(i))}$,
- as many columns or lists as the number of cameras actually viewing the 3D point located along the viewing direction of pixel i, each column comprising an index $C_{(i, n(i), N(i, n(i)))}$ of a camera actually viewing the 3D point,
- as many columns or lists as the number of cameras actually viewing the 3D point located along the viewing direction of pixel, each column comprising a value $R_{(i, n(i), N(i, n(i)))}$ of the R component of the RGB triplet representing a color of a 3D point when viewed by the corresponding camera $C_{(i, n(i), N(i, n(i)))}$ of the camera-array,
- as many columns or lists as the number of cameras actually viewing the 3D point located along the viewing direction of pixel, each column comprising a value $G_{(i, n(i), N(i, n(i)))}$ of the G component of the RGB triplet representing a color of a 3D point when viewed by the corresponding camera $C_{(i, n(i), N(i, n(i)))}$ of the camera-array,
- as many columns or lists as the number of cameras actually viewing the 3D point located along the viewing direction of pixel, each column comprising a value $B_{(i, n(i), N(i, n(i)))}$ of the B component of the RGB triplet representing a color of a 3D point when viewed by the corresponding camera $C_{(i, n(i), N(i, n(i)))}$ of the camera-array.

The data file 60 is compact and comprises all the information necessary to represent a light-field content. Moreover, as the data related to a single 3D point and corresponding to the different viewing directions under which this single 3D point can be viewed is regrouped in a unique data file, the use of filtering algorithms, such as algorithms used for removing redundant information when color is independent from viewing directions (Lambertian surfaces for instance), is made easier. The digital file 60 may be seen as a variant of the Deep Image format specified in OpenEXR, which is a reference format in image and video post-processing.

During a step 505, the processor 401 associates the digital file 60 comprising the data representing the scene to a location and an orientation of the virtual camera VCam in the world coordinates system.

In an implementation of the method according to the disclosure, during a step 506, the processor 401 generates a message to be sent to a device capable of processing the meta-image Met-Im, the message comprising the data file 60 and the meta-image M-Im. This step is optional

This message can then transmitted through the interface unit 405 to an external device. The interface unit 405 transmits a signal to the external device via cable and/or wireless communication carrying the message comprising the parameters. The external device is capable of processing the meta-image Met-Im using the parameters received in the message transmitted by the device 400. This step is optional

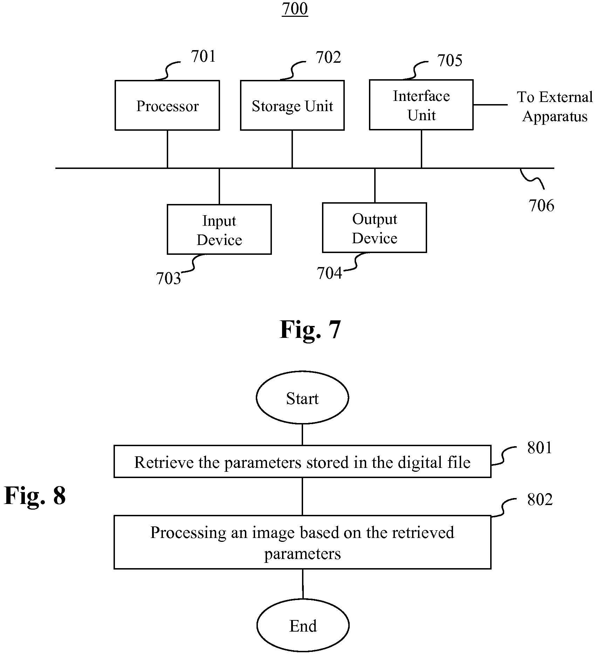

**Figure 7** is a schematic block diagram illustrating an example of a device for processing the meta-image Met-Im according to an embodiment of the present disclosure.

The device 700 comprises a processor 701, a storage unit 702, an input device 703, a display device 704, and an interface unit 705 which are connected by a bus 706. Of course, constituent elements of the computer device 700 can be connected by a connection other than a bus connection.

The processor 701 controls operations of the device 700. The storage unit 702 stores at least one program capable of processing the meta-image Met-Im to be executed by the processor 701, and various data, including the parameters stored in the digital file 60, parameters used by computations performed by the processor 701, intermediate data of computations performed by the processor 701, and so on. The processor 701 can be formed by any known and suitable hardware, or software, or a combination of hardware and software. For example, the processor 701 can be formed by dedicated hardware such as a processing circuit, or by a programmable processing unit such as a CPU (Central Processing Unit) that executes a program stored in a memory thereof.

The storage unit 702 can be formed by any suitable storage or means capable of storing the program, data, or the like in a computer-readable manner. Examples of the storage unit 702 include non-transitory computer-readable storage media such as semiconductor memory devices, and magnetic, optical, or magneto-optical recording media loaded into a read and write unit. The program causes the processor 701 to perform a process for processing the meta-image Met-Im based on the parameters of stored in the digital file 60 provided with the meta-image Met-Im to be processed according to an embodiment of the present disclosure as described hereinafter with reference to figure 8.

The input device 703 can be formed by a keyboard, a pointing device such as a mouse, or the like for use by the user to input commands, to make user's selections of parameters used for processing the meta-image Met-Im. The output device 704 can be formed by a display device to display, for example, a Graphical User Interface (GUI), images generated according to an embodiment of the present disclosure. The input device 703 and the output device 704 can be formed integrally by a touchscreen panel, for example.

The interface unit 705 provides an interface between the device 700 and an external device. The interface unit 705 can be communicable with the external device via cable and/or wireless communication. In an embodiment, the external device can be the device 400.

**Figure 8** is a flow chart for explaining a process for processing the meta-image Met-Im according to an embodiment of the disclosure.

The processor 701 of the device 700 executes the program capable of processing the meta-image Met-Im based on the parameters stored in the digital file 60 associated with the meta-image Met-Im.

Thus, the processor 701, during a step 801, retrieves the parameters stored in the data file 60 that are to be used to process the meta-image Met-Im. The data file can be obtained for instance from a CD-ROM or a flash drive or by downloading the data file 60 from a server.

Then, during a step 802, the processor 701 processes the meta-image Met-Im based on the parameters retrieved during step 801.

The processing of the meta-image Met-Im can consist in refocusing, rendering, modifying the viewing direction of, etc. said meta-image Met-Im or a combination of any of these actions.

Although the present invention has been described hereinabove with the reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments can be interchanged, where appropriate.

As can be appreciated by one skilled in the art, aspects of the present principles can be embodied as a system, device, method, signal or computer readable product or medium.

Notably, the present disclosure relates to a method executed by at least one processor and comprising:

- obtaining a digital file representative of at least one meta-image of a scene, the digital file comprising, for at least one pixel of the meta-image, at least one set of parameters representative of a first 3D point of a plurality of 3D points representing the scene, the set of parameters comprising:
- a first parameter representing respective colors of the 3D point when it is viewed along at least two first viewing directions of the scene.

According to another aspect, the present disclosure relates to a device for obtaining data representative of a scene comprising at least one processor configured to:

- obtain a digital file representative of at least one meta-image of a scene, the digital file comprising, for at least one pixel of the meta-image, at least one set of parameters representative of a first 3D point of a plurality of 3D points representing the scene, the set of parameters comprising:
- a first parameter representing respective colors of the 3D point when it is viewed along at least two first viewing directions of the scene.

According to at least one embodiment, the set of parameters comprises a second parameter representative of a position of the first 3D point along a second viewing direction of a virtual camera adapted to view the meta-image.

According to at least one embodiment, the set of parameters comprises a third parameter representative of the at least two first viewing directions of the scene along which the first 3D point can be viewed

According to at least one embodiment, the plurality of 3D points representing the scene is acquired by a camera-array.

According to at least one embodiment, the plurality of 3D points representing the scene is acquired by a plenoptic camera.

According to at least one embodiment, the third parameter comprises an identifier of at least one camera of the camera-array that views the 3D point.

According to at least one embodiment, the set of parameters comprises an identifier of at least one sub-aperture image in which the 3D point is viewed.

According to at least one embodiment, the first parameter comprises indexes representing colors of the at least one 3D point when it is viewed along the viewing direction.

According to at least one embodiment, the digital file is stored together with parameters representative of a location of the virtual camera.

According to another aspect, the present disclosure relates to a method executed by at least one processor and comprising editing a meta-image of a scene using data stored in a data file associated with the meta-image, the data file comprising for at least one pixel of the meta-image at least one set of parameters representative of a first 3D point of a plurality of 3D points representing the scene, the set of parameters comprising a first parameter representing respective colors of the 3D point when it is viewed along at least two first viewing directions of the scene.

According to another aspect, the present disclosure relates to a device for editing a meta-image of a scene using data stored in a data file associated with the meta-image, the data file comprising for at least one pixel of the meta-image at least one set of parameters representative of a first 3D point of a plurality of 3D points representing the scene, the set of parameters comprising:

- a first parameter representing respective colors of the 3D point when it is viewed along at least two first viewing directions of the scene.

While not explicitly described, the above electronic devices of the present disclosure can be adapted to perform at least one the above method of the present disclosure in any of its embodiments.

According to another aspect, the present disclosure relates to a data package comprising data associated with a meta-image of a scene, the data comprising for at least one pixel of the meta-image at least one set of parameters representative of a first 3D point of a plurality of 3D points representing the scene, the set of parameters comprising:

- a first parameter representing respective colors of the 3D point when it is viewed along at least two first viewing directions of the scene.

According to another aspect, the present disclosure relates to a signal comprising the meta-image and a data file comprising data associated with the meta-image comprising for at least one pixel of the meta-image at least one set of parameters representative of a first 3D point of a plurality of 3D points representing the scene, the set of parameters comprising:

- a first parameter representing respective colors of the 3D point when it is viewed along at least two first viewing directions of the scene.

According to another aspect, the present disclosure relates to a computer program product for a programmable device, the computer program product comprising a sequence of instructions for implementing at least one embodiment of at least one of the methods detailed above when loaded into and executed by the programmable device.

Notably, according to at least one embodiment, the present disclosure relates to a computer program product for a programmable device, the computer program product comprising a sequence of instructions for implementing, when loaded into and executed by the programmable device, a method executed by at least one processor and comprising:

- obtaining a digital file representative of at least one meta-image of a scene, the digital file comprising, for at least one pixel of the meta-image, at least one set of parameters representative of a first 3D point of a plurality of 3D points representing the scene, the set of parameters comprising:
- a first parameter representing respective colors of the 3D point when it is viewed along at least two first viewing directions of the scene.

Notably, according to at least one embodiment, the present disclosure relates to a computer program product for a programmable device, the computer program product comprising a sequence of instructions for implementing when loaded into and executed by the programmable device, a method executed by at least one processor and comprising editing a meta-image of a scene using data stored in a data file associated with the meta-image, the data file comprising for at least one pixel of the meta-image at least one set of parameters representative of a first 3D point of a plurality of 3D points representing the scene, the set of parameters comprising a first parameter representing respective colors of the 3D point when it is viewed along at least two first viewing directions of the scene.

According to an embodiment of the present disclosure, the computer readable storage medium tangibly embodies a program of instructions executable by a computer for performing, when the non-transitory software program is executed by a computer, a method, implemented in an electronic device, at least one of the methods detailed above when loaded into and executed by the programmable device.

According to an embodiment of the present disclosure, the computer readable storage medium tangibly embodies a program of instructions executable by a computer for performing, when the non-transitory software program is executed by a computer, a method executed by at least one processor and comprising:

- obtaining a digital file representative of at least one meta-image of a scene, the digital file comprising, for at least one pixel of the meta-image, at least one set of parameters representative of a first 3D point of a plurality of 3D points representing the scene, the set of parameters comprising:

- a first parameter representing respective colors of the 3D point when it is viewed along at least two first viewing directions of the scene.

According to an embodiment of the present disclosure, the computer readable storage medium tangibly embodies a program of instructions executable by a computer for performing, when the non-transitory software program is executed by a computer, a method executed by at least one processor and comprising editing a meta-image of a scene using data stored in a data file associated with the meta-image, the data file comprising for at least one pixel of the meta-image at least one set of parameters representative of a first 3D point of a plurality of 3D points representing the scene, the set of parameters comprising a first parameter representing respective colors of the 3D point when it is viewed along at least two first viewing directions of the scene.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

It is also to be pointed out that the at least some of embodiments can be combined together, even if not explicitly disclosed above.

**Claims**

1. A method executed by at least one processor and comprising:

   - obtaining a digital file representative of at least one meta-image of a scene, said digital file comprising, for at least one pixel of said meta-image, at least one set of parameters representative of a first 3D point of a plurality of 3D points representing said scene, said set of parameters comprising:
   - a first parameter representing respective colors of said 3D point when it is viewed along at least two first viewing directions of said scene.

2. A device for obtaining data representative of a scene comprising at least one processor configured to:

   - obtain a digital file representative of at least one meta-image of a scene, said digital file comprising, for at least one pixel of said meta-image, at least one set of parameters representative of a first 3D point of a plurality of 3D points representing said scene, said set of parameters comprising:
   - a first parameter representing respective colors of said 3D point when it is viewed along at least two first viewing directions of said scene.

3. The method or the device according to claim 1 or claim 2, wherein said set of parameters comprises a second parameter representative of a position of said first 3D point along a second viewing direction of a virtual camera adapted to view said meta-image.

4. The method or the device according to claim 3, wherein said set of parameters comprises a third parameter representative of said at least two first viewing directions of said scene along which said first 3D point can be viewed.

5. The method or the device according to claim 1 or 2, wherein said plurality of 3D points representing said scene is acquired by a camera-array.

6. The method or the device according to claim 1 or 2, wherein said plurality of 3D points representing said scene is acquired by a plenoptic camera.

7. The method or the device according to claims 4 and 5, wherein said third parameter comprises an identifier of at least one camera of said camera-array that views said 3D point.

8. The method or the device according to claim 6, wherein said set of parameters comprises an identifier of at least one sub-aperture image in which said 3D point is viewed.

9. The method or the device according to claim 1 or 2, wherein said first parameter comprises indexes representing colors of said at least one 3D point when it is viewed along said viewing direction.

10. The method or the device according to claim 3 wherein said digital file is stored together with parameters representative of a location of said virtual camera.

11. A method executed by at least one processor and comprising editing a meta-image of a scene using data stored in a data file associated with said meta-image, said data file comprising for at least one pixel of said meta-image at least one set of parameters representative of a first 3D point of a plurality of 3D points representing said scene, said set of parameters comprising:

- a first parameter representing respective colors of said 3D point when it is viewed along at least two first viewing directions of said scene.

12. A device for editing a meta-image of a scene using data stored in a data file associated with said meta-image, said data file comprising for at least one pixel of said meta-image at least one set of parameters representative of a first 3D point of a plurality of 3D points representing said scene, said set of parameters comprising:

- a first parameter representing respective colors of said 3D point when it is viewed along at least two first viewing directions of said scene.

13. A data package comprising data associated with a meta-image of a scene, said data comprising for at least one pixel of said meta-image at least one set of parameters representative of a first 3D point of a plurality of 3D points representing said scene, said set of parameters comprising:

- a first parameter representing respective colors of said 3D point when it is viewed along at least two first viewing directions of said scene.

14. Signal comprising said meta-image and a data file comprising data associated with said meta-image comprising for at least one pixel of said meta-image at least one set of parameters representative of a first 3D point of a plurality of 3D points representing said scene, said set of parameters comprising:

- a first parameter representing respective colors of said 3D point when it is viewed along at least two first viewing directions of said scene.

15. Computer program product for a programmable device, the computer program product comprising a sequence of instructions for implementing a method according to any one of claims 1 or 3 to 11 when loaded into and executed by the programmable device.

103

101

103

104

102

100

**Fig. 1A (Prior Art)**

114

112

110

**Fig. 1B (Prior Art)**

**Fig. 2**

**Fig. 3**

<u>400</u>

401 402 405

| Processor | Storage Unit | Interface Unit |

To External Apparatus

406

| Input Device |

| Output Device |

403 404

# Fig. 4

Start

Acquiring an MVD content of a scene — 501

Obtaining a 3D point cloud from the MVD content — 502

Associating the parameters of the 3D points with the pixels of the meta-image — 503

Generating a data file representing the scene — 504

Associating the data file to the meta-image — 505

Generating a message comprising the data file — 506

End

# Fig. 5

Z map

$Z_{(i, 1)}$

$Z_{(i, 2)}$

$Z_{(i, n(i))}$

*pixel$_i$*

Camera index map

$N_{(i, 1)}$ | $C_{(i, 1, 1)}$ | $C_{(i, 1, 2)}$ | $\cdots$ | $C_{(i, 1, N(i,1))}$

$N_{(i, 2)}$ | $C_{(i, 2, 1)}$ | $C_{(i, 2, 2)}$ | $\cdots$ | $C_{(i, 1, N(i,2))}$

$N_{(i, n(i))}$ | $C_{(i, n(i), 1)}$ | $C_{(i, n(i), 2)}$ | $\cdots$ | $C_{(i, n(i), N(i,2))}$

R map

$R_{(i, 1, 1)}$ | $R_{(i, 1, 2)}$ | $\cdots$ | $R_{(i, 1, N(i,1))}$

$R_{(i, 2, 1)}$ | $R_{(i, 2, 2)}$ | $\cdots$ | $R_{(i, 1, N(i,2))}$

$R_{(i, n(i), 1)}$ | $R_{(i, n(i), 2)}$ | $\cdots$ | $R_{(i, n(i), N(i,2))}$

**Fig. 6**

EP 3 671 628 A1

700

701                702                705

| Processor | Storage Unit | Interface Unit |

To External
Apparatus

706

| Input Device | Output Device |

703          704

**Fig. 7**

**Fig. 8**

Start

Retrieve the parameters stored in the digital file          801

Processing an image based on the retrieved parameters          802

End

Europäisches
Patentamt

European
Patent Office

Office européen
des brevets

# EUROPEAN SEARCH REPORT

Application Number

EP 18 30 6721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "JPEG - Wikipedia", , 24 October 2018 (2018-10-24), XP055593397, Retrieved from the Internet: URL:https://en.wikipedia.org/w/index.php?title=JPEG&oldid=865526471 [retrieved on 2019-06-03] * page 5 - page 6 * * page 16 * | 1,2, 11-15 | INV. G06T5/50 |
| X | WO 2018/050725 A1 (THOMSON LICENSING [FR]) 22 March 2018 (2018-03-22) * page 1 * * page 31 * | 1-15 | |
| X | XIANG ZHANG ET AL: "Surface Light Field Compression using a Point Cloud Codec", ARXIV.ORG, CORNELL UNIVERSITY LIBRARY, 201 OLIN LIBRARY CORNELL UNIVERSITY ITHACA, NY 14853, 29 May 2018 (2018-05-29), XP080883391, * page 1 - page 5 * | 1-15 | |
| | | | TECHNICAL FIELDS SEARCHED (IPC) |
| A | "Technical report of the joint ad hoc group for digital representations of light/sound fields for immersive media applications", 115. MPEG MEETING;30-5-2016 - 3-3-2016; GENEVA; (MOTION PICTURE EXPERT GROUP OR ISO/IEC JTC1/SC29/WG11),, no. N16352, 13 June 2016 (2016-06-13), XP030023025, * page 34 - page 59 * | 1-15 | G06T |

The present search report has been drawn up for all claims

| Place of search | Date of completion of the search | Examiner |
|---|---|---|
| Munich | 6 June 2019 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6721

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2019

| Patent document cited in search report | Publication date | Patent family member(s) | Publication date |
|---|---|---|---|
| WO 2018050725 A1 | 22-03-2018 | CN 109792528 A<br>KR 20190052089 A<br>WO 2018050725 A1 | 21-05-2019<br>15-05-2019<br>22-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANAT LEVIN et al.** Understanding camera trade-offs through a Bayesian analysis of light field projections. *conference proceedings of ECCV,* 2007

- Ph.D dissertation thesis. **REN NG.** Digital Light Field Photography. July 2006